# EUROPÄISCHE PATENTSCHRIFT

(11) **EP 3 698 451 B1**
(45) Veröffentlichungstag und Bekanntmachung des Hinweises auf die Patenterteilung: **12.08.2026**
(21) Anmeldenummer: 18807855.4
(22) Anmeldetag: 16.10.2018
(51) Int. Cl.: H02J 7/62, H02J 7/60, H01H 50/44

(54) **BATTERIESYSTEM, LOKALES STROMNETZ UND TRENNSCHALTER**
BATTERY SYSTEM, LOCAL ELECTRICAL GRID AND DISCONNECTOR
SYSTÈME DE BATTERIE, RÉSEAU ÉLECTRIQUE LOCAL ET SECTIONNEUR

(30) Priorität: 20.10.2017 DE 102017124567
(43) Veröffentlichungstag der Anmeldung: 26.08.2020
(73) Patentinhaber: Sonnen GmbH, 87499 Wildpoldsried (DE)
(72) Erfinder: GEIGER, Michael, 87766 Memmingerberg (DE); HENNEMANN, Wolfram, 87700 Memmingen (DE)
(74) Vertreter: Adares PartGmbB
(86) Internationale Anmeldenummer: PCT/DE2018/100852
(87) Internationale Veröffentlichungsnummer: WO 2019/076405

(56) Entgegenhaltungen:
- DE-A1- 102014 220 033
- KR-A- 20090 125 533
- US-A1- 2015 229 143
- US-A1- 2016 099 591

## Beschreibung

Die Erfindung betrifft ein Batteriesystem, ein lokales Stromnetz und einen Trennschalter.

Insbesondere betrifft die Erfindung ein Batteriesystem zum Einsatz in einem lokalen Stromnetz, das lokale Stromnetz und einen Trennschalter zum Einsatz in dem Batteriesystem. Das Batteriesystem weist mindestens ein Batteriemodul aus mehreren miteinander verschalteten Batterien oder elektrischen Sekundärzellen vorzugsweise mit einer gesamten Speicherkapazität von mehr als zwei kWh auf. Die einzelnen Batterien sind wiederum aus einer Mehrzahl Sekundärzellen aufgebaut. Bei den Sekundärzellen kann es sich auch um gekoppelte strukturell voneinander getrennte elektrische Sekundärzellen handeln.

Die Batterien und das aus elektrisch gekoppelten Batterien gebildete Batteriemodul können somit auf- und wieder entladen werden, wenn das Batteriemodul mit einer Lade- und Entladevorrichtung in Form des lokalen Stromnetzes verbunden ist. Aufgrund dieser Eigenschaft lässt sich mit Hilfe eines derartigen Batteriesystems die nicht für den unmittelbaren Verbrauch benötigte elektrische Energie beispielsweise aus lokalen Gleich- oder Wechselstromquellen für den zeitlich späteren Bedarf speichern.

Ein derartiges Batteriesystem muss jedoch funktional sicher sein. D.h., es muss eine Möglichkeit geben, das Batteriemodul von einer an es angeschlossenen Lade- und Entladevorrichtung zu trennen, wenn eine sicherheitskritische Situation wie z.B. Überspannung, Übertemperatur, Überladung oder dgl. vorliegt. Diese Trennung ist zumindest in Deutschland in Zukunft verpflichtend und zu zertifizieren.

Aus einem nicht druckschriftlich belegten Stand der Technik ist bekannt, eine funktionale Sicherheit für derartige Batteriesysteme mit Busverbindungen über funktional sichere Buskommunikation und/oder passive Bauteile wie beispielsweise einem Hochstromrelais zu bewerkstelligen. Dies ist allerdings in der Regel teuer, kompliziert und aufwändig zu zertifizieren.

US 2015/0229143 A1 betrifft ein elektrisches Speichersystem mit mehreren elektrischen Speichern, welche geladen und entladen werden können. Über Relais sind die Speicher mit einem Verbraucher verbunden. Die Relais werden durch eine Steuerung ein- oder ausgeschaltet, um die Verbindung zwischen Verbraucher und den Speichern herzustellen oder zu lösen.

DE 10 2014 220 033 A1 offenbart ein Batteriesystem mit mehreren Batteriemodulen, welche über Trennschalter mit einem Wechselrichter verbunden sind. Es sind Steuergeräte vorgesehen, welche die Spannung der Batteriemodule hinsichtlich Tiefenentladung und Überladung, sowie die Zelltemperaturen überwachen, um die Trennschalter entsprechend zu bedienen.

US 2016/0099591 A1 beschreibt eine Überladungsschutz-Vorrichtung für eine Batterie. Diese beruht auf dem Prinzip, dass eine überladene Batterie anschwillt, sich also physisch ausdehnt. Bei der aus US 2016/0099591 A1 bekannten Lösung werden entlang der Oberfläche des Batteriegehäuses mehrere Schalter angeordnet, die sich bei einem Anschwellen des Batteriegehäuses öffnen. Da diese Schalter in einem Steuerkreis in Reihe miteinander und mit einer Haltespule eines Batteriemodul-Trennschalters verbunden sind, führt das Öffnen eines der Schalter dazu, dass der Trennschalter ausgelöst wird und das Batteriemodul trennt.

KR 2009-0125533 A betrifft eine Anlasser-Vorrichtung für einen Motor. Weil während einer Motor-Anlassphase die Batteriespannung sinken kann, und weil sich bei bestimmten Ausführungen die Haltespule des Batterierelais aus der Batterie selbst speist, besteht die Gefahr, dass der durch die Haltespule fließende Strom nicht ausreicht, um das Batterierelais geschlossen zu halten. Um ein unerwünschtes Öffnen/Flackern des Batterierelais und eine damit verbundene Lichtbogenbildung zu vermeiden, wird eine zweite Haltespule eingesetzt, welche die im Zuge des Batterie-Spannungsabfalls verlorene Haltekraft kompensieren soll. Die Haltespule wird bestromt, wenn der Anlassschalter betätigt wird.

Aus der DE102015220820A1 ist ferner ein Spannungswandler mit einem Gleichspannungsanschluss bekannt, der mit einer Gleichspannungsquelle koppelbar ist. Zwischen dem Gleichspannungsanschluss und der Gleichspannungsquelle kann ein elektrisches Schaltelement angeordnet sein, welches ausgelegt ist, eine elektrische Verbindung zwischen dem Gleichspannungsanschluss und der Gleichspannungsquelle zu unterbrechen. Das elektrische Schaltelement ist als ein Batterieschutzschalter oder eine Überstromschutzvorrichtung ausgebildet.

Es besteht aber ein Bedarf an einer funktionalen Sicherheit für ein Batteriesystem der oben genannten Art, das kostengünstig und einfach zu realisieren und zertifizieren ist.

Es ist daher eine Aufgabe der Erfindung, ein Batteriesystem, ein lokales Stromsystem und einen Trennschalter bereit zu stellen, welche kostengünstig und einfach zu realisieren sind.

Die Erfindung betrifft ein Batteriesystem, insbesondere zum Einsatz in einem lokalen Stromnetz, aufweisend:
- zumindest ein Batteriemodul;
- einen mit dem Batteriemodul elektrisch verbundenen Ausgangsanschluss zum Laden und/oder Entladen des Batteriemoduls aus dem und/oder in das lokale Stromnetz;
- einen zwischen dem Batteriemodul und mindestens einem Pol des Ausgangsanschlusses angeordneten Trennschalter, welcher ausgebildet ist, in einem offenen Zustand die elektrische Verbindung zwischen dem Batteriemodul und dem mindestens einem Pol des Ausgangsanschlusses zu trennen;
- einen ersten Signalstromkreis, welcher ausgebildet ist, bei einem durch das Batteriemodul erkannten Fehlerzustand eine Auslösung des Trennschalter derart zu bewirken, die elektrischen Verbindung zwischen dem Batteriemodul und dem mindestens einen Pol des Ausgangsanschlusses zu unterbrechen.

Das Batteriesystem ist modular aufgebaut. Eine Steuerung in Form des ersten Signalstromkreises und ein Ausgangsanschluss zum Laden und/oder Entladen des Batteriemoduls aus dem und/oder in das lokale Stromnetz sowie eine Trenneinheit in Form des Trennschalters zum Trennen des Ausgangsanschlusses von dem Batteriemodul sind vorhanden. Dadurch ist das Batteriesystem kostengünstig und einfach zu realisieren. Zudem ist die funktionale Sicherheit des Batteriesystems gewährleistet. Zudem ist es möglich, zur Realisierung der funktionalen Sicherheit ausschließlich auf Hardware zu setzen, so dass jedenfalls für die funktionale Sicherheit kein Verlassen ausschließlich auf Software nötigt ist.

Die Anzahl der Batteriemodule beträgt mindestens eins. D.h., das Batteriesystem kann ein Batteriemodul oder mehrere Batteriemodule aufweisen. Wenn das Batteriesystem mehrere Batteriemodule enthält, sind die Batteriemodule zur Buskommunikation bevorzugt jeweils beispielsweise über einen Stecker miteinander verbunden. Der Stecker ist bevorzugt zur Buskommunikation im Sinne einer Komfortfunktion (d.h. nicht sicherheitsgerichtet), Spannungsversorgung der Batteriemodule und zur Weiterleitung von Signalen an den ersten Signalstromkreis ausgebildet. Der Stecker ist vorzugsweise mehrpolig und beispielsweise ein RJ45 Stecker. Für den Stecker weist jedes Batteriemodul vorzugsweise zwei Buchsen auf, eine für den Eingang zu einem weiteren Batteriemodul und eine für den Ausgang zu einem noch weiteren Batteriemodul oder zum Anschluss an die Batteriesystem-Steuerung mit seinem ersten Signalstromkreis. Unabhängig davon, wieviel Batteriemodule das Batteriesystem enthält, ist eine funktionale Sicherheit mittels des ersten Signalstromkreises gewährleistet. Durch die Verbindung über den Stecker kann sämtliche Kommunikation sicherheitsgerichtet sowie komfortgerichtet gewährleistet werden.

Jedes Batteriemodul kann einen Fehlerzustand erkennen und somit eine sicherheitskritische Situation als Fehlerzustand an den ersten Signalstromkreis melden, der wiederum eine Auslösung des Trennschalter derart bewirkt, die elektrischen Verbindung zwischen dem Batteriemodul und dem mindestens einen Pol des Ausgangsanschlusses zu unterbrechen. Daher ist die Sicherheitseinrichtung in Form des ersten Signalstromkreises immer funktionsfähig, egal wie viele Batteriemodule in dem Batteriemodul enthalten sind.

Der Ausgangsanschluss zum Laden und/oder Entladen des Batteriemoduls aus dem und/oder in das lokale Stromnetz ist bevorzugt ausgebildet, mit einem Wechselrichter verbindbar zu sein.

In einer bevorzugten Ausführungsform weist der erste Signalstromkreis ein durch das Batteriemodul gesteuertes erstes Fehlerrelais auf, welches bei dem durch das Batteriemodul erkannten Fehlerzustand geöffnet wird, um dadurch den ersten Signalstromkreis zu öffnen. Ein Relais ist vorteilhaft gegenüber anderen elektrischen Bauteilen, weil es einen relativ geringen Kontaktübergangswiderstand im Milliohmbereich, eine relativ hohe Einschaltleistung bzw. hohe Überlastbarkeit aufweist, keine Kühlung benötigt und relativ robust ist. Das Batteriesystem ist kabelbruchsicher.

Bei der soeben erläuterten Ausführungsform kann das erste Fehlerrelais insbesondere in dem ersten Stromkreis integriert sein, so dass ihre Öffnung eine unmittelbare Unterbrechung des ersten Stromkreises bewirkt. Alternativ zu dieser Ausführungsform kann das erste Fehlerrelais derart ausgebildet und/oder angeordnet sein, dass es bei dem durch das Batteriemodul erkannten Fehlerzustand geschlossen wird, um dadurch den ersten Signalstromkreis auf ein vorgegebenes Potential, beispielsweise auf eine Masse der Vorrichtung, zu bringen. Insbesondere kann das erste Fehlerrelais in einer Pulldown-Konfiguration angeordnet sein, um bei seinem Schließen den ersten Stromkreis mit dem vorgegebenen Potential, insbesondere mit Masse zu verbinden. Um dies zu bewerkstelligen, ist vorzugsweise ein mit dem ersten Fehlerrelais verbundener erster Pullup-Widerstand vorgesehen, welcher das Potential des ersten Stromkreis auf ein Arbeits-Potential vorspannt.

Bevorzugt weist das Batteriesystem weiterhin einen zweiten Signalstromkreis auf, welcher ausgebildet ist, bei einem durch das Batteriemodul erkannten Fehlerzustand eine Auslösung des Trennschalter derart zu bewirken, dass die elektrische Verbindung zwischen dem Batteriemodul und dem mindestens einen Pol des Ausgangsanschlusses unterbrochen wird. Aufgrund dieser Redundanz kann jedes Batteriemodul durch zwei unabhängige Signalstromkreise die Verbindung zu dem Ausgangsanschluss unterbrechen lassen. Dadurch wird die Sicherheit erhöht.

In einer bevorzugten Ausführungsform weist der zweite Signalstromkreis ein durch das Batteriemodul gesteuertes zweites Fehlerrelais auf, welches bei dem durch das Batteriemodul erkannten Fehlerzustand geöffnet wird, um dadurch den zweiten Signalstromkreis zu öffnen. Das Batteriemodul steuert also das erste Fehlerrelais und das zweite Fehlerrelais. Auch hier kann alternativ das zweite Fehlerrelais derart ausgebildet und/oder angeordnet sein, dass es bei dem durch das Batteriemodul erkannten Fehlerzustand geschlossen wird, um dadurch den zweiten Signalstromkreis auf ein vorgegebenes Potential, beispielsweise auf eine Masse der Vorrichtung, zu bringen. Insbesondere kann das zweite Fehlerrelais in einer Pulldown-Konfiguration angeordnet sein, um bei seinem Schließen den zweiten Stromkreis mit dem vorgegebenen Potential, insbesondere mit Masse zu verbinden. Um dies zu bewerkstelligen, ist vorzugsweise ein mit dem zweiten Fehlerrelais verbundener zweiter Pullup-Widerstand vorgesehen, welcher den zweiten Stromkreis auf ein Arbeits-Potential vorspannt.

Bevorzugt sind ein oder mehrere weitere Batteriemodule vorgesehen, wobei der erste Signalstromkreis ein oder mehrere durch das Batteriemodul gesteuerte weitere erste Fehlerrelais aufweist und/oder wobei der zweite Signalstromkreis ein oder mehrere durch das Batteriemodul gesteuerte weitere zweite Fehlerrelais aufweist. Bevorzugt sind jedem Batteriemodul jeweils ein erstes Fehlerrelais und jeweils ein zweites Fehlerrelais zugeordnet. Die ersten Fehlerrelais mehrerer oder aller Batteriemodule sind vorzugsweise in Reihe miteinander verbunden. Dies gilt vorzugsweise auch für die zweiten Fehlerrelais. Somit sind der erste Stromkreis und der zweite Stromkreis jeweils für sich geschlossen, wenn kein Batteriemodul einen Fehlerzustand erkennt.

Bevorzugt ist jedes erste und zweite Fehlerrelais "normally open" ausgebildet, d.h. es handelt sich um einen Schließer. Der Schließer ist ausgebildet, einen Kontakt zu schließen, wenn er betätigt bzw. angesteuert wird und wird auch als Arbeitskontakt bezeichnet, weil er, wenn er betätigt wird, einen Kontakt herstellt. Dies hat den Vorteil, dass das oder die Fehlerrelais einer Batterie und somit die zugehörigen Stromkreise auch dann geöffnet sind bzw. werden, wenn die die Batterie vollständig ausfällt und kein Fehlersignal geben kann. In diesem Fall wird ein nicht-Ansteuern des Fehlerrelais als Fehlersignal angesehen.

Sind ein oder mehrere weitere Batteriemodule vorgesehen, sodass entsprechend mehrere erste Fehlerrelais und/oder mehrere zweite Fehlerrelais vorgesehen sind, dann kann eines der ersten Fehlerrelais entsprechend einer vorangehend zuerst erläuterten Ausführungsform bei dem durch das zugehörige Batteriemodul erkannten Fehlerzustand geöffnet werden, um dadurch den ersten Signalstromkreis zu öffnen, während ein weiteres der ersten Fehlerrelais entsprechend einer danach erläuterten Ausführungsform geschlossen wird, um dadurch den ersten Signalstromkreis auf ein vorgegebenes Potential zu bringen. Entsprechendes kann soweit vorhanden für die mehreren zweiten Fehlerrelais gelten.

In einer bevorzugten Ausführungsform weist der Trennschalter eine erste Haltespule auf, welche durch den ersten Signalstromkreis mit Strom versorgt wird und/oder eine zweite Haltespule auf, welche durch den zweiten Signalstromkreis mit Strom versorgt wird, wobei die erste Haltespule und/oder die zweite Haltespule ausgebildet sind/ist, den Trennschalter in einem geschlossenen Zustand zu halten. Der Trennschalter ist ausgebildet, bei Unterbrechung des Stroms durch die erste und/oder zweite Haltespule das Batteriemodul oder die Batteriemodule selbsttätig von dem Ausganganschluss zu trennen. Damit kann insbesondere ein sicherer Zustand realisiert werden, welcher Zertifizierungsvorgaben IEC 62619, VDE-AR-E2510-50:2017-05 und UL 1973/9540 entspricht.

In einer bevorzugten Ausführungsform weist das Batteriesystem den ersten Signalstromkreis und den zweiten Signalstromkreis und den Trennschalter auf, der die erste Haltespule und die zweite Haltespule aufweist. Die erste Haltespule wird durch den ersten Signalstromkreis mit Strom versorgt und die zweite Haltespule wird durch den zweiten Signalstromkreis mit Strom versorgt, wobei sie ausgebildet sind, den Trennschalter in einem geschlossenen Zustand zu halten, wenn Strom durch sie fließt.

In einer Variante der vorstehenden Ausführungsform weist das Batteriesystem den ersten Signalstromkreis und den zweiten Signalstromkreis und den Trennschalter mit der ersten Haltespule und der zweiten Haltespule und weiterhin ein erstes und ein zweites Relais auf. Das erste Relais wird durch den ersten Signalstromkreis mit Strom versorgt, und das zweite Relais wird durch den zweiten Signalstromkreis mit Strom versorgt. Weiterhin schaltet das erste Relais einen ersten Hilfsstromkreis, in dem sich die erste Haltespule befindet, und schaltet das zweite Relais einen zweiten Hilfsstromkreis, in dem sich die zweite Haltespule befindet. Solange Strom durch die erste Haltespule und die zweite Haltespule fließt, wird der Trennschalter in dem geschlossenen Zustand gehalten. Die erste Haltespule bzw. die zweite Haltespule werden also indirekt von dem ersten Signalstromkreis bzw. dem zweiten Signalstromkreis mit Strom versorgt.

Alternativ kann bei den beiden vorangehend beschriebenen Ausführungsformen der Trennschalter mit lediglich einer Haltespule ausgebildet sein, wobei die Haltespule entweder von dem im ersten oder zweiten Signalstromkreis fließenden Strom durchflossen wird, oder alternativ der Strom, welcher im ersten oder zweiten Signalstromkreis fließt ein Relais ansteuert, das einen Hilfsstromkreis schließt, welcher durch die Haltespule läuft.

Bevorzugt ist der Trennschalter derart zumindest zweipolig mit einem ersten Schalter und einem zweiten Schalter ausgebildet, in einem offenen Zustand die elektrische Verbindung zwischen dem Batteriemodul und zwei Polen des Ausgangsanschlusses zu trennen. Bevorzugter ist der Trennschalter dreipolig mit einem dritten Schalter ausgebildet, welcher in einem geschlossenen Zustand des Trennschalters eine Stromversorgung für den ersten Signalstromkreis und/oder den zweiten Signalstromkreis sicherstellt und in dem geöffneten Zustand des Trennschalters die Stromversorgung für den ersten Signalstromkreis und/oder den zweiten Signalstromkreis unterbricht. Dieser dritte Schalter stellt eine zusätzliche Sicherheit dar.

In einer bevorzugten Ausführungsform ist der Trennschalter einpolig mit einem ersten Schalter oder mehrpolig mit zumindest einem zweiten Schalter und/oder einem dritten Schalter ausgebildet, wobei jeder Schalter eine elektrische Sicherung aufweist. Dadurch hat der Trennschalter auch jeweils eine Überstromsicherungsfunktion, was wiederum eine zusätzliche Überstromsicherung einspart.

Bevorzugt ist der Trennschalter einpolig mit einem ersten Schalter oder mehrpolig mit zumindest einem zweiten Schalter und/oder einem dritten Schalter ausgebildet, wobei alle Schalter derart mechanisch miteinander gekoppelt sind, dass sie nur gemeinsam zwischen den offenen Zustand und einem geschlossenen Zustand des Trennschalters wechseln können. Wenn die erste Haltespule oder, falls vorgesehen, die zweite Haltespule nicht bestromt ist, dann fallen also alle Schalter des Trennschalters gemeinsam in den offenen Zustand.

In einer bevorzugten Ausführungsform weist der Trennschalter ein Betätigungselement auf, mittels dessen der Trennschalter manuell aus dem offenen Zustand in den geschlossenen Zustand überführbar ist. Der Trennschalter ist dadurch manuell ein- und ausschaltbar.

**Bevorzugt** werden/wird der erste Stromkreis und/oder der zweite Stromkreis aus dem Batteriemodul gespeist. Beispielsweise weist das Batteriesystem einen DC/DC-Wandler auf, der zwischen das Batteriemodul und dem ersten und/oder zweiten Signalstromkreis geschaltet ist. Wenn Hilfsstromkreise vorgesehen sind, dann werden auch diese vorzugsweise aus dem Batteriemodul gespeist.

Das Batteriesystem ist bevorzugt ein Batteriesystem, das für die temporäre Versorgung eines elektrischen Gebäudeenergieversorgungsnetzes mit elektrischer Energie geeignet ist. Aufgrund der Speicherkapazität der Batterien oder Sekundärzellen des Batteriemoduls oder der Batteriemodule lässt sich mit Hilfe des Batteriesystems die nicht für den unmittelbaren Verbrauch benötigte elektrische Energie beispielsweise aus lokalen Gleich- oder Wechselstromquellen für den zeitlich späteren Bedarf speichern. Lokale, d.h. in der näheren Umgebung des Gebäudenetzes angesiedelte Gleich- und Wechselstromquellen sind beispielsweise Photovoltaik-Anlagen, Windkraftanlagen oder aber auch Blockheizkraftwerke. Diese Batteriesysteme kommen insbesondere bei der Versorgung elektrischer Gebäudeenergieversorgungsnetze privater Haushalte und gewerblicher Betriebe mit elektrischer Energie zum Einsatz.

Die Erfindung betrifft ferner ein lokales Stromnetz mit einem Batteriesystem nach einer oder mehreren der vorstehend beschriebenen Ausführungsformen und einem mit dem Ausgangsanschluss verbundenen Wechselrichter. Der Wechselrichter weist bevorzugt neben einen Anschluss zum Verbinden mit dem Ausgangsanschluss weiterhin einen Anschluss zum Verbinden mit dem Gebäudeenergieversorgungsnetz und/oder der lokalen Gleich- oder Wechselstromquelle insbesondere einer Photovoltaikanlage auf. Der Wechselrichter wandelt beispielsweise von Solar-Modulen einer PhotovoltaikAnlage erzeugten Strom um und speist diesen in das Batteriesystem und/oder in das Gebäudeenergieversorgungsnetz, Gleichzeitig kann er ausgebildet sein, das Batteriesystem zu überwachen und/oder zu steuern.

Weiterhin betrifft die Erfindung einen mehrpoligen Trennschalter mit einem ersten Schalter und zumindest einem zweiten Schalter und/oder einem dritten Schalter zum Trennen eines Batteriemoduls von mindestens einem Pol eines Ausgangsanschlusses, aufweisend zumindest eine erste Haltespule und eine zweite Haltespule, welche ausgebildet sind, die Schalter nur dann in einem geschlossenen Zustand zu halten, wenn die erste Haltespule und die zweite Haltespule bestromt sind.

Bevorzugt weist der mehrpolige Trennschalter weiterhin ein Betätigungselement auf, mittels dessen die Schalter gemeinsam manuell aus dem offenen Zustand in den geschlossenen Zustand überführbar sind. Zudem gelten für den Trennschalter in Bezug auf das Batteriesystem beschriebene bevorzugte Ausführungsformen, die sich auf den im Batteriesystem enthaltenen Trennschalter beziehen, entsprechend.

Weitere Eigenschaften und Vorteile der Erfindung werden im Zusammenhang mit den in den Figuren gezeigten und nachfolgend exemplarisch beschriebenen Ausführungsbeispielen verdeutlicht. Es zeigen schematisch:
- Fig. 1: einen Schaltplan eines Batteriesystems gemäß einer ersten Ausführungsform;
- Fig. 2: einen Schaltplan eines Batteriesystems gemäß einer zweiten Ausführungsform; und
- Fig. 3: einen Schaltplan eines Batteriesystems gemäß einer dritten Ausführungsform.

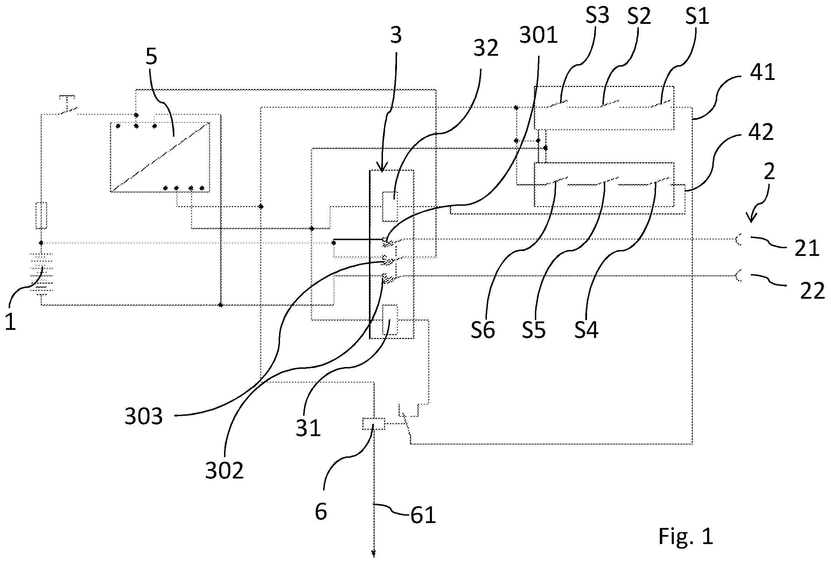

Fig. 1 zeigt einen Schaltplan eines Batteriesystems gemäß einer ersten Ausführungsform. Das Batteriesystem weist rein beispielhaft drei Batteriemodule 1 auf, die hier nur schematisch und nicht einzeln gezeigt sind. Weiterhin weist das Batteriesystem einen mit den Batteriemodulen 1 elektrisch verbundenen Ausgangsanschluss 2 zum Laden und/oder Entladen der Batteriemodule 1 aus einem und/oder in das lokale Stromnetz (nicht gezeigt) auf. Der Ausgangsanschluss ist ausgebildet, mit einem Wechselrichter (nicht gezeigt) verbunden zu werden.

Der Ausgangsanschluss 2 weist einen Pol 21 und einen Pol 22 auf. Zwischen den Batteriemodulen 1 und den Polen 21, 22 ist ein Trennschalter 3 angeordnet. Der Trennschalter 3 ist ausgebildet, in einem offenen Zustand die elektrische Verbindung zwischen den Batteriemodulen 1 und den Polen 21, 22 zu trennen. Ferner weist das Batteriesystem einen ersten Signalstromkreis 41 auf, welcher ausgebildet ist, bei einem durch das Batteriemodul 1 erkannten Fehlerzustand eine Auslösung des Trennschalter 3 derart zu bewirken, die elektrische Verbindung zwischen dem Batteriemodul 1 und den Polen 21, 22 zu unterbrechen. Weiterhin enthält das Batteriesystem einen zweiten Signalstromkreis 42, welcher ausgebildet ist, bei einem durch das Batteriemodul 1 erkannten Fehlerzustand eine Auslösung des Trennschalter 3 derart zu bewirken, die elektrische Verbindung zwischen dem Batteriemodul 1 und den Polen 21, 22 zu unterbrechen.

Der Trennschalter 3 weist eine erste Haltespule 31 auf, welche durch den ersten Signalstromkreis 41 mit Strom versorgt wird, und eine zweite Haltespule 32 auf, welche durch den zweiten Signalstromkreis 42 mit Strom versorgt wird. Die Haltespulen 31, 32 sind ausgebildet, den Trennschalter 3 in einem geschlossenen Zustand zu halten, wenn sie beide gleichzeitig mit Strom versorgt sind.

Der Trennschalter 3 ist weiterhin dreipolig ausgebildet. Er weist einen ersten Schalter 301 und einen zweiten Schalter 302 auf, welche ausgebildet sind, in einem offenen Zustand die elektrische Verbindung zwischen den Batteriemodulen 1 und den Polen 21, 22 zu trennen. Der erste Schalter 301 ist mit dem Pol 21 verbunden, während der zweite Schalter 302 mit dem Pol 22 verbunden ist. Ein dritter Schalter 303 des Trennschalters 3 ist ausgebildet, in einem geschlossenen Zustand des Trennschalters 3 eine Stromversorgung für den ersten Signalstromkreis 41 und den zweiten Signalstromkreis 42 sicherzustellen und in dem geöffneten Zustand des Trennschalters 3 die Stromversorgung für den ersten Signalstromkreis 41 und den zweiten Signalstromkreis 42 zu unterbrechen. Nur dann, wenn Strom sowohl durch die erste Haltespule 31 als auch durch die zweite Haltespule 32 fließt, wird der Trennschalter 3 in dem geschlossenen Zustand gehalten.

Der erste Stromkreis 41 weist drei erste Fehlerrelais S1, S2, S3 auf, welche jeweils einem der drei Batteriemodule 1 zugeordnet sind. Sie sind in Reihe geschaltet. Genauso weist der zweite Stromkreis 42 drei zweite Fehlerrelais S4, S5, S6 auf, welche jeweils einem Batteriemodul der drei Batteriemodule 1 zugeordnet sind. Auch sie sind in Reihe geschaltet. D.h., jedes Batteriemodul kann durch zwei unabhängige Fehlerrelais, nämlich ein erstes Fehlerrelais S1, S2, S3 und ein zweites Fehlerrelais S4, S5, S6, ein Schalten des Trennschalters 3 aus dem geschlossen Zustand in einen offenen Zustand auslösen, wenn es einen Fehlerzustand erkennt.

Der erste Stromkreis 41 und der zweite Stromkreis 42 werden aus den Batteriemodulen 1 gespeist. Das Batteriesystem weist hierzu einen DC/DC-Wandler 5 auf, der zwischen den Batteriemodulen 1 und dem ersten Stromkreis 41 und dem zweiten Signalstromkreis 42 geschaltet ist. Für den Fall, dass die Spannungsbereiche der Batteriemodule 1 und der Haltespulen 31,32 übereinstimmen, wäre der DC/DC-Wandler 5 entbehrlich.

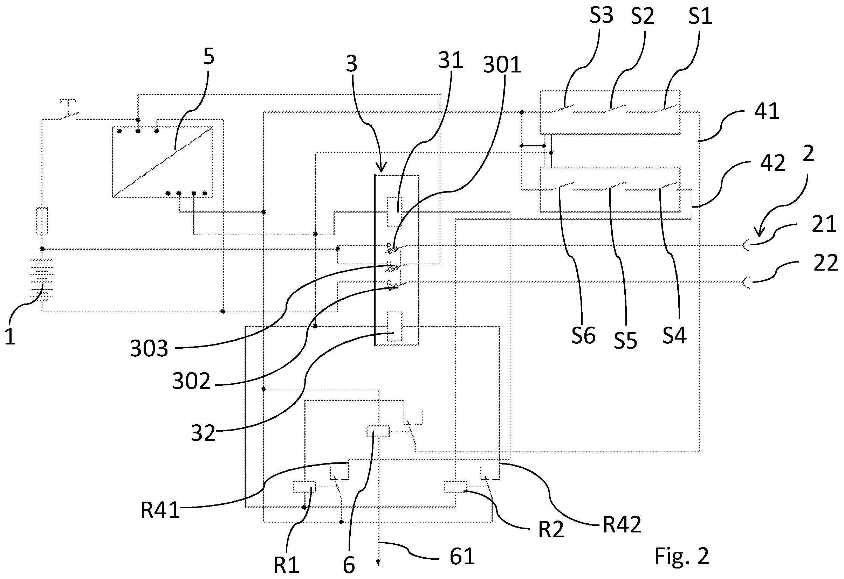

Fig. 2 zeigt einen Schaltplan eines Batteriesystems gemäß einer zweiten Ausführungsform. Das in Fig. 2 gezeigte Batteriesystem weist die gleichen Bauteile auf wie das in Fig. 1 gezeigte Batteriesystem aber weiterhin ein erstes Relais R1 und ein zweites Relais R2 auf. Die in Bezug auf Fig. 1 beschriebenen Bauteile und ihre Komponenten des in Fig. 2 gezeigten Batteriesystems sind auf die gleiche Weise ausgebildet und funktionieren auf die gleiche Weise wie in dem in Fig. 1 beschriebenen Batteriesystem mit dem Unterscheid, dass das erste Relais R1 durch den ersten Signalstromkreis 41 mit Strom versorgt wird und das zweite Relais R2 durch den zweiten Signalstromkreis 42 mit Strom versorgt wird. Anders als bei der in Fig. 1 gezeigten Ausführungsform ist die erste Haltespule 31 nicht Teil des ersten Signalstromkreises 41, sondern stattdessen das erste Relais R1. Entsprechend ist die zweite Haltespule 32 nicht Teil des zweiten Signalstromkreises 42, sondern das zweite Relais R2.

Das erste Relais R1 schaltet einen ersten Hilfsstromkreis R41, in dem sich die erste Haltespule 31 befindet, und das zweite Relais R2 schaltet einen zweiten Hilfsstromkreis R42, in dem sich die zweite Haltespule 32 befindet. Die erste Haltespule 31 bzw. die zweite Haltespule 32 werden also indirekt von dem ersten Signalstromkreis 41 bzw. dem zweiten Signalstromkreis 42 mit Strom versorgt.

Sowohl im ersten Batteriesystem gemäß Fig. 1 als auch im zweiten Batteriesystem gemäß Fig. 2 ist zudem ein Steuerrelais 6 vorgesehen, welches unabhängig von den übrigen Schaltelementen den Stromfluss durch die erste Haltespule 31 abschalten kann. Hierzu erhält das Steuerrelais 6 ein entsprechendes Signal über einen Steueranschluss 61.

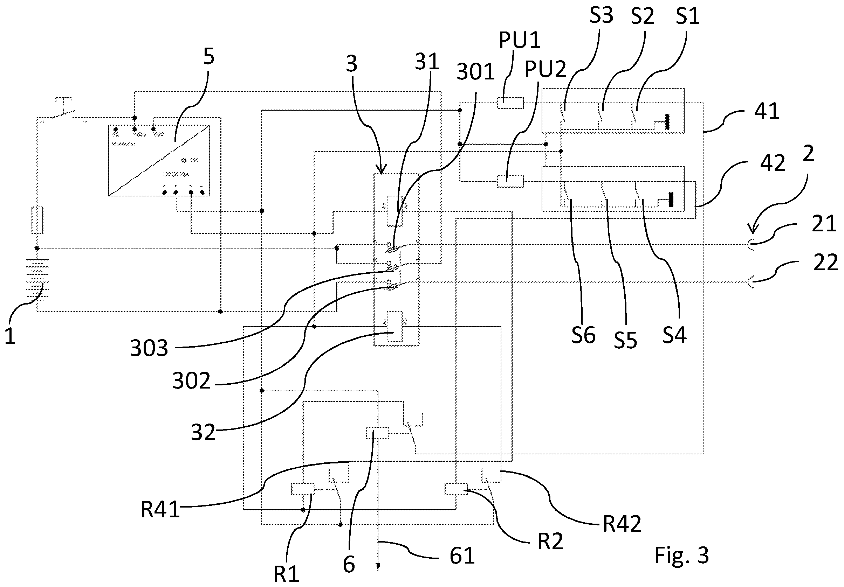

Fig. 3 zeigt einen Schaltplan eines Batteriesystems gemäß einer dritten Ausführungsform. Diese unterscheidet sich von dem Batteriesystem gemäß der in Fig. 2 dargestellten zweiten Ausführungsform durch die Anordnung und Funktionsweise der ersten Fehlerrelais S1, S2, S3 und der zweiten Fehlerrelais S4, S5, S6. Während die ersten Fehlerrelais S1, S2, S3 in der Ausführungsform gemäß Fig. 2 in dem ersten Signalstromkreis 41 in Reihe hintereinander geschaltet waren und ein Fehlerzustand und eine hierdurch bedingte Öffnung eines der ersten Fehlerrelais S1, S2, S3 zu einer Öffnung des ersten Signalstromkreises 41 führte, sind die ersten Fehlerrelais S1, S2, S3 in der Ausführungsform gemäß Fig. 3 zueinander parallel zwischen dem ersten Signalstromkreis 41 und Masse angeordnet. In diesem Fall führt ein Fehlerzustand und einem hierdurch bedingten Schließen eines der ersten Fehlerrelais S1, S2, S3. Dies wiederum führt dazu, dass der ersten Signalstromkreis 41 auf Masse gezogen und somit der Stromfluss durch das erste Relais R1 unterbrochen wird. Hierzu ist zwischen dem positiven Pol des ersten Signalstromkreises 41 und den ersten Fehlerrelais S1, S2, S3 ein erster Pullup-Widerstand PU1 angeordnet.

Diese Funktionsweise ist auch im zweiten Signalstromkreis 42 vorgesehen und wird mit einem zweiten Pullup-Widerstand PU2 und drei zueinander parallel angeordneten zweiten Fehlerrelais S4, S5, S6 bewerkstelligt, von denen eines oder mehrere bei einem Fehlerzustand des Batteriemoduls 1 geschlossen werden, um den zweiten Signalstromkreis 42 auf Masse zu ziehen. Hierdurch wird der Stromfluss durch das zweite Relais R2 unterbrochen.

Es ist zu beachten, dass für die Funktionsweise der Schaltung notwendig ist, ein durch eines oder mehreren der Fehlerrelais S1, S2, S3, S4, S5, S6 erzeugtes Pullup-/Pulldown-Signal zu einem Relaissignal umzuwandeln. Die schaltungstechnischen Details, um dies mit Hardware-Komponenten zu bewerkstelligen, sind einem Fachmann hinreichend bekannt und wird hier somit nicht näher erläutert.

### Bezugszeichenliste:

- PU1: erster Pullup-Widerstand
- PU2: zweiter Pullup-Widerstand
- R1: erstes Relais
- R2: zweites Relais
- R41: erster Hilfsstromkreis
- R42: zweiter Hilfsstromkreis
- S1: erstes Fehlerrelais
- S2: weiteres erstes Fehlerrelais
- S3: weiteres erstes Fehlerrelais
- S4: zweites Fehlerrelais
- S5: weiteres zweites Fehlerrelais
- S6: weiteres zweites Fehlerrelais
- 1: Batteriemodul
- 2: Ausgangsanschluss
- 21: Pol
- 22: Pol
- 3: Trennschalter
- 301: erster Schalter
- 302: zweiter Schalter
- 303: dritter Schalter
- 31: erste Haltespule
- 32: zweite Haltespule
- 41: erster Signalstromkreis
- 42: zweiter Signalstromkreis
- 5: DC/DC-Wandler
- 6: Steuerrelais
- 61: Steueranschluss

## Patentansprüche

1. Batteriesystem, insbesondere zum Einsatz in einem lokalen Stromnetz, aufweisend:
- zumindest ein Batteriemodul (1);
- einen mit dem Batteriemodul (1) elektrisch verbundenen Ausgangsanschluss (2) zum Laden und/oder Entladen des Batteriemoduls (1) aus dem und/oder in das lokale Stromnetz;
- einen zwischen dem Batteriemodul (1) und mindestens einem Pol (21, 22) des Ausgangsanschlusses (2) angeordneten Trennschalter (3), welcher ausgebildet ist, in einem offenen Zustand die elektrische Verbindung zwischen dem Batteriemodul (1) und dem mindestens einem Pol (21, 22) des Ausgangsanschlusses (2) zu trennen;
- einen ersten Signalstromkreis (41), welcher ausgebildet ist, bei einem durch das Batteriemodul (1) erkannten Fehlerzustand eine Auslösung des Trennschalter (3) derart zu bewirken, die elektrische Verbindung zwischen dem Batteriemodul (1) und dem mindestens einen Pol (21, 22) des Ausgangsanschlusses (2) zu unterbrechen; und
- einen zweiten Signalstromkreis (42), welcher ausgebildet ist, bei einem durch das Batteriemodul (1) erkannten Fehlerzustand eine Auslösung des Trennschalter (3) derart zu bewirken, dass die elektrische Verbindung zwischen dem Batteriemodul (1) und dem mindestens einen Pol (21, 22) des Ausgangsanschlusses (2) unterbrochen wird,
**dadurch gekennzeichnet, dass** der Trennschalter (3) eine erste Haltespule (31), welche durch den ersten Signalstromkreis (41) mit Strom versorgt wird, und eine zweite Haltespule (32) aufweist, welche durch den zweiten Signalstromkreis (42) mit Strom versorgt wird, und wobei die Haltespulen (31, 32) ausgebildet sind, den Trennschalter (3) nur dann in einem geschlossenen Zustand zu halten, wenn sie beide gleichzeitig mit Strom versorgt sind.

2. Batteriesystem nach Anspruch 1, **dadurch gekennzeichnet, dass** der erste Signalstromkreis (41) ein durch das Batteriemodul (1) gesteuertes erstes Fehlerrelais (S1) aufweist, welches bei dem durch das Batteriemodul (1) erkannten Fehlerzustand geöffnet wird, um dadurch den ersten Signalstromkreis (41) zu öffnen, oder geschlossen wird, um dadurch den ersten Signalstromkreis (41) auf ein vorgegebenes Potential zu bringen.

3. Batteriesystem nach Anspruch 1 oder 2, **dadurch gekennzeichnet, dass** der zweite Signalstromkreis (42) ein durch das Batteriemodul (1) gesteuertes zweites Fehlerrelais (S4) aufweist, welches bei dem durch das Batteriemodul (1) erkannten Fehlerzustand geöffnet wird, um dadurch den zweiten Signalstromkreis (42) zu öffnen, oder geschlossen wird, um dadurch den zweiten Signalstromkreis (42) auf ein vorgegebenes Potential zu bringen.

4. Batteriesystem nach einem der vorangehenden Ansprüche, **dadurch gekennzeichnet, dass** ein oder mehrere weitere Batteriemodule (1) vorgesehen sind, wobei der erste Signalstromkreis (41) ein oder mehrere durch das Batteriemodul (1) gesteuerte weitere erste Fehlerrelais (S2, S3) aufweist und/oder wobei der zweite Signalstromkreis (42) ein oder mehrere durch das Batteriemodul (1) gesteuerte weitere zweite Fehlerrelais (S5, S6) aufweist.

5. Batteriesystem nach einem der vorangehenden Ansprüche, **dadurch gekennzeichnet, dass** der Trennschalter (3) derart zumindest zweipolig mit einem ersten Schalter (301) und einem zweiten Schalter (302) ausgebildet ist, in einem offenen Zustand die elektrische Verbindung zwischen dem Batteriemodul und zwei Polen (21, 22) des Ausgangsanschlusses (2) zu trennen.

6. Batteriesystem nach Anspruch 5, **dadurch gekennzeichnet, dass** der Trennschalter (3) dreipolig mit einem dritten Schalter (303) ausgebildet ist, welcher in einem geschlossenen Zustand des Trennschalters (3) eine Stromversorgung für den ersten Signalstromkreis (41) und/oder den zweiten Signalstromkreis (42) sicherstellt und in dem geöffneten Zustand des Trennschalters (3) die Stromversorgung für den ersten Signalstromkreis (41) und/oder den zweiten Signalstromkreis (42) unterbricht.

7. Batteriesystem nach einem der vorangehenden Ansprüche, **dadurch gekennzeichnet, dass** der Trennschalter (3) einpolig mit einem ersten Schalter (301) oder mehrpolig mit zumindest einem zweiten Schalter (302) und/oder einem dritten Schalter (303) ausgebildet ist und dass jeder Schalter (301, 302, 303) eine elektrische Sicherung aufweist.

8. Batteriesystem nach einem der vorangehenden Ansprüche, **dadurch gekennzeichnet, dass** der Trennschalter (3) einpolig mit einem ersten Schalter (301) oder mehrpolig mit zumindest einem zweiten Schalter (302) und/oder einem dritten Schalter (303) ausgebildet ist, wobei alle Schalter (301, 302, 303) derart mechanisch miteinander gekoppelt sind, dass sie nur gemeinsam zwischen den offenen Zustand und einem geschlossenen Zustand des Trennschalters (3) wechseln können.

9. Batteriesystem nach einem der vorangehenden Ansprüche, **dadurch gekennzeichnet, dass** der Trennschalter (3) ein Betätigungselement aufweist, mittels dessen der Trennschalter (3) manuell aus dem offenen Zustand in den geschlossenen Zustand überführbar ist.

10. Batteriesystem nach einem der vorangehenden Ansprüche, **dadurch gekennzeichnet, dass** der erste Signalstromkreis (41) und/oder der zweite Signalstromkreis (42) aus dem Batteriemodul (1) gespeist wird.

11. Lokales Stromnetz mit einem Batteriesystem nach einem der vorangehenden Ansprüche und einem mit dem Ausgangsanschluss (2) verbundenen Wechselrichter.

12. Mehrpoliger Trennschalter (3) mit einem ersten Schalter (301) und zumindest einem zweiten Schalter (302) und/oder einem dritten Schalter (303) zum Trennen eines Batteriemoduls (1) von mindestens einem Pol (21, 22) eines Ausgangsanschlusses (2), wobei alle Schalter derart mechanisch miteinander gekoppelt sind, dass sie nur gemeinsam zwischen den offenen Zustand und einem geschlossenen Zustand des Trennschalters wechseln können, aufweisend zumindest eine erste Haltespule (31) und eine zweite Haltespule (32), welche ausgebildet sind, die Schalter (301, 302, 303) nur dann in einem geschlossenen Zustand zu halten, wenn die erste Haltespule (31) und die zweite Haltespule (32) gleichzeitig bestromt sind, wobei die erste Haltespule (31) ausgebildet ist, durch einen ersten Signalstromkreis (41) mit Strom versorgt zu werden, und die zweite Haltespule (32) ausgebildet ist, durch einen zweiten Signalstromkreis (42) mit Strom versorgt zu werden.

13. Mehrpoliger Trennschalter (3) nach Anspruch 12, **gekennzeichnet durch** ein Betätigungselement, mittels dessen die Schalter (301, 302, 303) gemeinsam manuell aus dem offenen Zustand in den geschlossenen Zustand überführbar sind.

## Claims

1. A battery system, in particular for use in a local electrical grid, comprising:
- at least one battery module (1);
- an output terminal (2) electrically connected to the battery module (1) and serving for charging and/or discharging the battery module (1) from and/or into the local electrical grid;
- a disconnector (3) arranged between the battery module (1) and at least one pole (21, 22) of the output terminal (2) and configured to, in an open state, disconnect the electrical connection between the battery module (1) and the at least one pole (21, 22) of the output terminal (2);
- a first signal circuit (41) configured to, in the event of a fault state identified by the battery module (1), bring about triggering of the disconnector (3) in such a way as to interrupt the electrical connection between the battery module (1) and the at least one pole (21, 22) of the output terminal (2),
- a second signal circuit (42) configured to, in the event of a fault state identified by the battery module (1), bring about triggering of the disconnector (3) in such a way that the electrical connection between the battery module (1) and the at least one pole (21, 22) of the output terminal (2) is interrupted
**characterized in that**
the disconnector (3) comprises a first holding coil (31), which is supplied with current by the first signal circuit (41), and a second holding coil (32), which is supplied with current by the second signal circuit (42), and wherein the holding coils (31, 32) are configured to hold the disconnector (3) in a closed state only when they are both supplied with current simultaneously.

2. The battery system as claimed in claim 1, **characterized in that** the first signal circuit (41) comprises a first fault relay (S1), which is controlled by the battery module (1) and which, in the event of the fault state identified by the battery module (1), is opened in order thereby to open the first signal circuit (41), or is closed in order thereby to bring the first signal circuit (41) to a predefined potential.

3. The battery system as claimed in claim 1 or 2, **characterized in that** the second signal circuit (42) comprises a second fault relay (S4), which is controlled by the battery module (1) and which, in the event of the fault state identified by the battery module (1) is opened in order thereby to open the second signal circuit (42), or is closed in order thereby to bring the second signal circuit (42) to a predefined potential.

4. The battery system as claimed in any of preceding claims, **characterized in that** one or a plurality of further battery modules (1) are provided, wherein the first signal circuit (41) comprises one or a plurality of further first fault relays (S2, S3) controlled by the battery module (1) and/or wherein the second signal circuit (42) comprises one or a plurality of further second fault relays (S5, S6) controlled by the battery module (1).

5. The battery system as claimed in any of the preceding claims, **characterized in that** the disconnector (3) is configured at least in two-pole fashion with a first switch (301) and a second switch (302) in such a way as, in an open state, to disconnect the electrical connection between the battery module and two poles (21, 22) of the output terminal (2).

6. The battery system as claimed in claim 5, **characterized in that** the disconnector (3) is configured in three-pole fashion with a third switch (303), which, in a closed state of the disconnector (3), ensures a current supply for the first signal circuit (41) and/or the second signal circuit (42) and, in the opened state of the disconnector (3), interrupts the current supply for the first signal circuit (41) and/or the second signal circuit (42).

7. The battery system as claimed in any of the preceding claims, **characterized in that** the disconnector (3) is configured in single-pole fashion with a first switch (301) or in multi-pole fashion with at least a second switch (302) and/or a third switch (303), and **in that** each switch (301, 302, 303) has an electrical fuse.

8. The battery system as claimed in any of the preceding claims, **characterized in that** the disconnector (3) is configured in single-pole fashion with a first switch (301) or in multi-pole fashion with at least a second switch (302) and/or a third switch (303), wherein all switches (301, 302, 303) are mechanically coupled to one another in such a way that they can change between the open state and a closed state of the disconnector (3) only jointly.

9. The battery system as claimed in any of the preceding claims, **characterized in that** the disconnector (3) comprises an actuation element, by means of which the disconnector (3) is able to be transferred manually from the open state to the closed state.

10. The battery system as claimed in any of the preceding claims, **characterized in that** the first circuit (41) and/or the second circuit (42) are/is fed from the battery module (1).

11. A local electrical grid comprising a battery system as claimed in any of the preceding claims and an inverter connected to the output terminal (2).

12. A multi-pole disconnector (3) comprising a first switch (301) and at least a second switch (302) and/or a third switch (303) for disconnecting a battery module (1) from at least one pole (21, 22) of an output terminal (2), whereby all switches are mechanically coupled to each other in such a way that they can only switch between the open state and a closed state of the disconnector together, comprising at least a first holding coil (31) and a second holding coil (32), which are configured to hold the switches (301, 302, 303) in a closed state only if the first holding coil (31) and the second holding coil (32) are energized simultaneously, wherein the first holding coil (31) is designed to be powered by a first signal circuit (41) and the second holding coil (32) is designed to be powered by an second signal circuit (42).

13. The multi-pole disconnector (3) as claimed in claim 12, **characterized by** an actuation element, by means of which the switches (301, 302, 303) are able jointly to be transferred manually from the open state to the closed state.

## Revendications

1. Un système de batterie, en particulier pour une utilisation dans un réseau électrique local, contenant :
- au moins un module de batterie (1) ;
- une borne de sortie (2) connectée électriquement au module de batterie (1) pour charger et/ou décharger le module de batterie (1) depuis et/ou vers le réseau électrique local ;
- un interrupteur de déconnexion (3) disposé entre le module de batterie (1) et au moins un pôle (21, 22) de la borne de sortie (2), conçu pour déconnecter la connexion électrique entre le module de batterie (1) et l'au moins un pôle (21, 22) de la borne de sortie (2) à l'état ouvert ;
- un premier circuit de signal (41) conçu pour provoquer un déclenchement de l'interrupteur de déconnexion (3) en cas de défaut détecté par le module de batterie (1) de manière à interrompre la connexion électrique entre le module de batterie (1) et l'au moins un pôle (21, 22) de la borne de sortie (2) ; et
- un second circuit de signal (42) conçu pour provoquer un déclenchement de l'interrupteur de déconnexion (3) en cas de défaut détecté par le module de batterie (1) de manière à ce que la connexion électrique entre le module de batterie (1) et l'au moins un pôle (21, 22) de la borne de sortie (2) soit interrompue,
**caractérisé en ce que**
l'interrupteur de déconnexion (3) possède une première bobine de maintien (31) alimentée par le premier circuit de signal (41) et une seconde bobine de maintien (32) alimentée par le second circuit de signal (42), et dans lequel les bobines de maintien (31, 32) sont conçues pour maintenir l'interrupteur de déconnexion (3) seulement en état fermé lorsqu'elles sont toutes deux alimentées simultanément.

2. Le système de batterie selon la revendication 1, **caractérisé en ce que** le premier circuit de signal (41) possède un premier relais de défaut (S1) contrôlé par le module de batterie (1), qui sera ouvert à l'état de défaut détecté par le module de batterie (1) afin d'ouvrir le premier circuit de signal (41), ou sera fermé afin d'amener le premier circuit de signal (41) à un potentiel prédéterminé.

3. Le système de batterie selon la revendication 1 ou 2, **caractérisé en ce que** le second circuit de signal (42) possède un second relais de défaut (S4) contrôlé par le module de batterie (1), qui sera ouvert à l'état de défaut détecté par le module de batterie (1) afin d'ouvrir le second circuit de signal (42), ou sera fermé afin d'amener le second circuit de signal (42) à un potentiel prédéterminé.

4. Le système de batterie selon l'une des revendications précédentes, **caractérisé en ce qu'**un ou plusieurs modules de batterie supplémentaires (1) sont fournis, dans lequel le premier circuit de signal (41) possède un ou plusieurs premiers relais de défaut supplémentaires (S2, S3) contrôlés par le module de batterie (1) et/ou dans lequel le second circuit de signal (42) possède un ou plusieurs seconds relais de défaut supplémentaires (S5, S6) contrôlés par le module de batterie (1).

5. Le système de batterie selon l'une des revendications précédentes, **caractérisé en ce que** l'interrupteur de déconnexion (3) est conçu pour être au moins bipolaire avec un premier interrupteur (301) et un second interrupteur (302), de sorte que la connexion électrique entre le module de batterie et deux pôles (21, 22) de la borne de sortie (2) soit déconnectée à l'état ouvert.

6. Le système de batterie selon la revendication 5, **caractérisé en ce que** l'interrupteur de déconnexion (3) est conçu tripolaire avec un troisième interrupteur (303) qui assure une alimentation électrique pour le premier circuit de signal (41) et/ou le second circuit de signal (42) dans un état fermé de l'interrupteur de déconnexion (3) et interrompt l'alimentation pour le premier circuit de signal (41) et/ou le second circuit de signal (42) à l'état ouvert de l'interrupteur de déconnexion (3).

7. Le système de batterie selon l'une des revendications précédentes, **caractérisé en ce que** l'interrupteur de déconnexion (3) est conçu unipolaire avec un premier interrupteur (301) ou multipolaire avec au moins un second interrupteur (302) et/ou un troisième interrupteur (303), et que chaque interrupteur (301, 302, 303) possède un fusible électrique.

8. Le système de batterie, selon l'une des revendications précédentes, **caractérisé en ce que** l'interrupteur de déconnexion (3) est conçu unipolaire avec un premier interrupteur (301) ou multipolaire avec au moins un second interrupteur (302) et/ou un troisième interrupteur (303), dans lequel tous les interrupteurs (301, 302, 303) sont tellement couplés mécaniquement entre eux qu'ils ne peuvent commuter ensemble qu'entre l'état ouvert et un état fermé de l'interrupteur de déconnexion (3).

9. Le système de batterie selon l'une des revendications précédentes, **caractérisé en ce que** l'interrupteur de déconnexion (3) possède un élément d'actionnement par lequel l'interrupteur de déconnexion (3) peut être transféré manuellement de l'état ouvert à l'état fermé.

10. Le système de batterie selon l'une des revendications précédentes, **caractérisé en ce que** le premier circuit de signal (41) et/ou le second circuit de signal (42) sont alimentés par le module de batterie (1).

11. Un réseau électrique local avec un système de batterie selon l'une des revendications précédentes et un onduleur connecté à la borne de sortie (2).

12. Un interrupteur de déconnexion multipolaire (3) comprenant un premier interrupteur (301) et au moins un second interrupteur (302) et/ou un troisième interrupteur (303) pour déconnecter un module de batterie (1) d'au moins un pôle (21, 22) d'une borne de sortie (2), dans lequel tous les interrupteurs sont mécaniquement couplés entre eux de manière à ne pouvoir commuter ensemble qu'entre l'état ouvert et l'état fermé de l'interrupteur de déconnexion, contenant au moins une première bobine de maintien (31) et une seconde bobine de maintien (32), qui sont conçues pour maintenir les interrupteurs (301, 302, 303) à l'état fermé uniquement si la première bobine de maintien (31) et la seconde bobine de maintien (32) sont simultanément alimentées, dans lequel la première bobine de maintien (31) est conçue pour être alimentée par un premier circuit de signal (41), et la seconde bobine de maintien (32) est conçue pour être alimentée par un second circuit de signal (42).

13. L'interrupteur multipolaire (3) selon la revendication 12, **caractérisé par** un élément d'actionnement à l'aide duquel les interrupteurs (301, 302, 303) sont transférable ensemble manuellement de l'état ouvert à l'état fermé.
